# EUROPEAN PATENT SPECIFICATION

(11) **EP 1 333 167 B1**
(45) Date of publication and mention of the grant of the patent: **24.03.2010**
(21) Application number: 01975075.1
(22) Date of filing: 17.08.2001
(51) Int. Cl.: F02B 27/04, F02B 75/10

(54) **OPERATING MODE FOR INTERNAL COMBUSTION ENGINE "ADELSHIN AGGREGATE PHASE THERMODYNAMIC CYCLE FOR INTERNAL COMBUSTION ENGINE" AND ENGINE OPERATING WITH SAID CYCLE**
BETRIEBSART FÜR EINEN VERBRENNUNGSMOTOR "ADELSHIN-AGGREGATPHASENTHERMODYNAMIKZYKLUS FÜR EINEN VERBRENNUNGSMOTOR" UND MIT DEM ZYKLUS ARBEITENDER MOTOR
MODE DE FONCTIONNEMENT D'UN MOTEUR A COMBUSTION INTERNE A CYCLE THERMODYNAMIQUE A PHASES COMBINEES DE TYPE ADELCHINE ET MOTEUR FONCTIONNANT SELON CE CYCLE

(30) Priority: 09.10.2000 RU 2000125872
(43) Date of publication of application: 06.08.2003
(73) Proprietor: Adelshin, Almir Vagisovich, St. Petersburg, 195273 (RU); Adelshin, Rinat Vagisovich, St Petersburg 195273 (RU)
(72) Inventor: Adelshin, Almir Vagisovich, St. Petersburg, 195273 (RU); Adelshin, Rinat Vagisovich, St Petersburg 195273 (RU)
(74) Representative: Dilg, Haeusler, Schindelmann Patentanwaltsgesellschaft mbH
(86) International application number: PCT/RU2001/000352
(87) International publication number: WO 2002/031328

(56) References cited:
- WO-A1-92/03639
- RU-C1- 2 055 224
- SU-A1- 1 377 427
- US-A- 4 050 539
- US-A- 4 339 918
- US-A- 4 418 532
- US-A- 5 245 824
- US-A- 5 293 744

## Description

### TECHNICAL FIELD.

The invention relates to propulsion engineering in particular to improvement of thermodynamic cycle, as a operation mode of internal combustion engine, at the expense of special operational processes with the use of kinetic energy of exhaust gases, accompanying other operational processes of energetic separation in the swirl chamber, as a device of thermodynamic transformation and neutralization of exhaust gases.

### BACKGROUND ART.

The thermodynamic cycle of A.Adelshin for internal combustion engine without forced induction and internal combustion engine operating on the given cycle [1] are well known. It represents an extended thermodynamic cycle of S.Carnot and it is based on the fact that in a collector behind the exhaust valve vacuum is created. The latter causes the accelerated discharge of the exhaust gases from the combustion chamber with creation of deep vacuum in latter. Such discharging results in the compulsory rise of the piston from position BDC to TDC, i.e. an additional useful operation for the rotation of crankshaft is produced. Here the cooling of cylinder walls and intake of unheated and fresh charge on a high speed is produced. The absence of exhaust residual gases in the combustion chamber raises the delivery ratio. The vacuum is created at the expense of the discharge of the exhaust gases with supersonic speeds determined by the passage through a supersonic nozzle.

To the lacks of the given mode of operation, it is possible to attribute an imperfection concerning an aggregative state of a working medium depending on modes of operation and appropriate basic thermodynamic parameters, and complexity of creation of a steady state of vacuum with the help of the engine specified in the given application.

It is also known, accepted for the prototype, an internal combustion engine [2]. The engine contains a case with cylinder-piston group, organs of gaseous exchange, and the exhaust manifold and supplied by swirl ejector and additional organs of gaseous exchange such as exhaust valves connected by a pipeline with a passive nozzle of swirl ejector, an active nozzle of which is connected to the exhaust manifold. As a result, the cylinders of the engine through exhaust valves are connected to such source of discharge as swirl ejector. Besides the additional exhaust, valves are connected by the pipeline with paraxial zone of mixture chamber of swirl ejector. In addition, the installation of swirl ejector between the engine radiative cooler and the engine provides the intake of environment by the ejector through the cooler and the cooling of the heat-carrier in this system.

The offered engineering solution has new properties - removal of the exhaust gases from the cylinder before air supply in it, absence of induction and exhaust valves overlapping, absence of cylinder air purge, increase of exhaust gases removal speed and air supply in the cylinder, work reducing for the removal of exhaust gases from the cylinder, expansion work increase, completeness of exhaust gases removal from the actual the cylinder volume, improvement of engines ecological characteristics, noise blanking and use of swirl ejector for engine cooling, provides essential increase of engine capacity, increase of performance index and efficiency and also reducing of toxic substances emission in environment.

To the lacks of the given engine, it is necessary to attribute the complexity of the swirl ejector transition, as a basic operational medium of the system, to the constant auto modeling mode at ICE cyclic exhaust. In addition, the aggregative state of working medium and its basic thermodynamic characteristics are not determined. Because, of this at operation of a real ICE, a number of distinctive positive results, probably, are difficult to achieve.

US 5,293,744 discloses an exhaust manifold muffler for an internal combustion engine, that decrease the flow resistance and the amplitudes of pressure pulsation. A swirl of exhaust gas is provided by means of manifold pipes extending tangentially in to a first muffler chamber. Since the cross-sectional area of the swirl pipe is smaller than the cross-sectional area of a manifold pipe, the velocity of the swirl of the exhaust gas increases.

US 4,339,918 discloses means for accelerating the discharge of exhaust gas from an internal combustion engine, adapted to be mounted to the end of the engine exhaust pipe, in which exhaust gas from the engine is swirlingly guided by a plurality of spiral blades disposed in a tubular member, to form a super low pressure space at the center of the exhaust gas flow, thereby to accelerate the discharge of the exhaust gas. As Result, a super low pressure of the flow is provided without separating exhausted gas in an inner paraxial cold flow and a hot surrounding swirling flow.

US 4,418,532 discloses an exhaust system of an internal combustion engine comprising an ejector provided in the exhaust pipe of the engine and a compressor driven by the engine. Pipes are provided for selectively supplying compressed air to a nozzle of the ejector and to the intake pipe of the engine by operating valves. The exhaust pipe of the engine is communicated with an exhaust pressure reducing chamber of the ejector. The valves are adapted to be operated by the throttle valve of the engine and are so arranged that the compressor is communicated with the ejector in part-open throttle operation and with the intake pipe in wide-open throttle operation.

US 4,050,539 discloses an exhaust apparatus for internal combustion engines with an outer pipe having an enlarged intermediate portion and at least one end portion having nearly the same diameter as the exhaust pipe from the engine for connection thereto, an inner pipe of approximately the same diameter as the exhaust pipe, a plurality of helical passages provided between the inner and outer pipes and sets of fins arranged inside the inner pipe at each end to impart vortical flow of gases passing through the inner pipe and to accelerate the gases through the helical passages and absorb them from the engine, the end portion of the outer pipe being connected with the exhaust pipe by means of an encircling clamping ring.

### DISCLOSURE OF INVENTION.

The purpose of the invention is the increase of ICE efficiency, increase of operational and improvement of ecological ICE parameters.

The specified technical effect, according to the invention, is achieved due to the fact that the operation mode of the internal combustion engine, representing a closed thermodynamic cycle containing cycles of isochoric, isobaric heat input of supply during combustion of a fuel-air mix, adiabatic expansion of the burned down gases, isochoric removal of heat at the moment of their exhaust from the engine and adiabatic compression of a new fresh charge consisting in the fact that internal combustion engine with a swirl chamber of energetic separation , incorporated in a single interdependent thermodynamic system with a single closed volume, exhaust gases are discharged in the swirl chamber where the gas flow CONSECUTIVELY separated into a cold paraxial one with low pressure and a hot swirling one with high pressure, in which exhaust gases are being heat up and make irreversible physical-chemical transformations with the opportunity of aggregative-phase transition of their chemical composing elements, compensated and cooled staying hot swirling flow through cold paraxial flow with transformation of common thermodynamic and physical - chemical parameters of exhaust gases with an opportunity aggregative- phase transition of its chemical composing elements into a state of liquid with its subsequent removal in a drainage, , condense exhaust gases and produce vacuum in a closed volume of a single thermodynamic system and make an additional positive power stroke by the expansion machine of the internal combustion engine, as a vacuum engine.

The other embodiment of realization of operation mode consists in the fact that the aggregative-phase transition of chemical composing elements of exhaust gases is carried out in a state of ionized gas.

The other embodiment of realization of operation mode, consists in the fact, that the exhaust gases are heat up with an opportunity of partial ionization of their chemical composing elements.

The other embodiment of realization of operation mode consists in the fact, that the exhaust gases are cooled with an opportunity of partial condensation of their chemical composing elements.

For the achievement of the specified technical effect, with the reference to the known from the level of engineering of an internal combustion engine design, containing the machine of volumetric expansion, communicating with the swirl chamber of energetic separation, it is preferable, according to the invention, to execute the engine design so that the machine of volumetric expansion of the engine and swirl chamber of energetic separation form a single closed volume with a single interdependent in thermodynamic parameters with the opportunity of vacuum creation in it.

The other embodiment of realization of the internal combustion engine design consists in the fact, that it is supplied with drainage system for removal of used condensed working medium of the engine.

The other embodiment of realization of the internal combustion engine design consists in the fact, that it is in addition supplied with system for removal of non-condensed gas component of the used working medium of the engine.

The other embodiment of realization of the internal combustion engine design consists in the fact, that the engine contains serially installed swirl chambers of energetic separation, forming interdependent thermodynamic system.

The other embodiment of realization of the internal combustion engine design consists in the fact, that the engine contains parallel installed swirl chambers of energetic separation, forming interdependent thermodynamic system.

The specified attributes are essential and interconnected among themselves with formation of a steady set of essential attributes sufficient for achievement of the specified technical effect.

With the purpose of the explanatory of a physical nature of the offered operation mode, as cyclic thermodynamic process, it is necessary to determine physical parameters and their dependences. So the basic thermodynamic parameters for the certain working medium (gas), are temperature, volume and pressure. Temperature characterizes a thermal state of the medium. Heat can spontaneously transit only from the more heated up mediums to the less heated up ones. Thus, the temperatures of mediums determine a direction of possible spontaneous transition of heat between mediums. The absolute pressure represents the force auctioning perpendicularly on a surface of the medium and referred to a unit of this surface area. The specific volume of substance represents the volume occupied by a unit of substance density.

At the absence of external influences on the system the state of a pure substance is unequivocally determined if two independent parameters are assigned. Any other parameter is an unequivocal function of the two given parameters. For each substance, the character of functional connection between pressure, volume and temperature is individual. Any three state parameters are unequivocally connected among themselves.

If even one of the state parameters varies there is a thermodynamic process, representing a set of varied system states. The process refers to as no equilibrium, in the course of which the system is not in the equilibrium state (i.e. the various parts of the system have various temperatures, pressure, density, concentration etc.). Any real process is to a greater or lesser extent no equilibrium (extract from page 6-11 from [3]).

Isoprocesses are thermodynamic processes, proceeding in the system with constant weight at constant level of one of parameters of the system state. Isochoric, as thermodynamic process, proceeding at constant volume of system refers to as. The Charles law describes Isochoric process in ideal gas: at a constant volume the pressure of the given weight of gas is directly proportional to its absolute temperature. The process is referred to as isobaric, in the course of which the pressure is kept constant. For isobaric process in ideal gas the Gey-Lussac law of combining volumes is right: at a constant pressure the volume of the given weight of gas is directly proportional to its absolute temperature. Thermodynamic process refers to as isothermal one, proceeding at a constant temperature. An isothermal process in ideal gas obeys to the Boyle law: for the given weight of gas at a constant temperature the product of numerical value of pressure and volume is a constant value. A thermodynamic process refers to as adiabatic process, which is carried out in the system without its heat exchange with external mediums (extract from page 88-90, from [4]).

The same way as, it is known from technical thermodynamics, that substances usually stay in one of three basic aggregative states: as gas, liquid or firm substance. Also there is the fourth state - ionized gas, or plasma. It is obvious, that one and the same substance under different states can be in various aggregative states, depending on the basic thermodynamic parameters, which are absolute temperature, absolute pressure and specific volume (density) of a substance.

A process, accompanying with the expense of heat and change of volume of an aggregative state of substance, refers to as a phase transitional one. Speaking about the phases of a pure substance, the aggregative state of the substance, is usually meant and consequently gas, liquid and firm phases are spoken. The substance in various aggregative states has various physical properties, and particularly density. This distinction is explained by the character of intermolecular interaction. The following classification of phase transition points is accepted: the transition point "liquid-vapour" refers to as a boiling-point (the same is a point of condensation), transition point "firm substance-liquid" refers to as a melting-point (the same is a point of hardening), and transition point "firm substances- vapor" refers to as a point of sublimation (extract from page 135-136 from [3]).

Thus, at an appropriate ratio of pressure and temperature the existence of a gaseous phase of the given quantity of an ICE working medium is possible from a point of a firm phase, liquid phase, gaseous phase and up to a phase point of weakly ionized gas. At a significant heating of gas consistent processes of its dissociation along with the subsequent disintegration of intermolecular bonds to ions, its ionization. The given process is possible at significant temperatures and pressures. Generally, for an ICE working medium it is a top border of aggregative-phase transition "gas - weakly ionized gas". The given state is accompanied by significant physical-chemical irreversible transformations of an ICE working medium, i.e. exhaust gas.

For example, in the course of some cooling of the given weight of a working medium there is a phenomenon of "liquids - vapor" phase transition, i.e. condensation. The condensation is possible at a certain ratio of temperature and pressure and accordingly for a certain molar weight of gas results in significant reduction of its specific volume (density). It in its tur causes a significant reduction of pressure in some total volume of thermodynamic system. Cooling up to the firm phase is also possible but taking into account, that liquids are difficult to compress, and water, for example, in general increases its volume during transition to ice, the given state is poorly suitable for realization of the offered mode of operation.

Thus, the physical essence of the offered operation mode consists in the fact, that in some parametrally determined closed thermodynamic volume V (or, conditionally closed), during cooling up to some temperature T with some pressure p, some conditional gas weight m, as working thermodynamic medium, condensation occurs. That is thermodynamic phase transition of a working medium (gas) in other aggregative state (in a liquid), accompanying by a change of heat of thermodynamic system and significant reduction of specific volume (density) of the given individual working medium. And it results in a significant reduction of pressure in the given parametral thermodynamic volume. Up to, a state of a steady, long on time vacuum existence. And if, to the given thermodynamic volume the machine of volumetric expansion is structurally attached, it is capable to make some positive power stroke, typically as a vacuum engine.

CONSECUTIVELY, the given physical effect, according to the invention, is achieved by the use of the method of consecutive cyclic transformation of ICE exhaust gases (ICE working medium), and its thermodynamic parameters, as a result of its energetic separation in swirl energetic separation chambers on the basis of the Ranque effect. Structurally it is achieved by the use of the swirl chamber of energetic separation together with ICE in the single thermodynamic system, interdependent for the basic parameters. Thus, with such interdependent thermodynamic parameters, concerning thermodynamic parameters of ICE working medium and ICE parameters, that the new best qualitative effect is achieved - the effect of energetic separation of gas, as an ICE working medium. It is necessary to understand, that the achievement of the declared technical result is possible only at the appropriate parameters and operational adjustments of the given single thermodynamic system. Thermodynamic, design values of a single thermodynamic system are rated, original for each technical embodiment. The energetic separation of exhaust gas, compensation of flows, their cooling, condensation and creation of vacuum in a single volume, are also achieved as a consecutive new set of technical attributes necessary for the achievement of the best result.

With the purpose of the explanatory of a physical nature of the basic operational effect, it is necessary to explain. Swirl effect, or the Ranque effect, represents a complex gas-dynamic process, occurring in a spatial swirling flow of viscous compressed gas.

"Basing on experimental data, it is possible to state the essence of the Ranque effect as follows. The compressed gas following through a tangential nozzle in a smooth pipe with a large speed forms an intensive whirlwind. Under the action of centrifugal forces particles of gas cannot move to the center of the pipe, they are moving rotating near the walls and pass to atmosphere through the valve. At the center of the rotating gas the vacuum is formed and the air inflows from atmosphere through the diaphragm. If one starts to close softly the valve, the pressure inside the pipe will raise, the inflow of atmospheric air is stopped. During the further closure of the valve a part of the gas flow in front of the valve "will pass to the smaller radius", moving to diaphragm and discharging to atmosphere through it. During transition from "the greater radius to the smaller one", according to the law of conservation of the moment of movement quantity, the peripheral speed should increase so that its product by radius remained constant: Vqr = const.

Thus, the closer will move a tricle of gas to the center of a pipe, the larger speed it will have. As a real gas possesses viscosity, every tricle will inhibit the next being closer to the center and to take energy away from it. As a result of it in a swirling flow there will be a transfer of energy from an axis to periphery, therefore energy of peripheral layers of gas will grow, the axial one - to fall. After transfer of superfluous energy, the axial layers of gas begin to rotate almost under the law of firm medium. At the same time because of decrease of tricles' static temperature in the direction of an axis the transfer of heat by thermal conductance of gas will be observed. The transfer of energy from axial layers of gas to peripheral ones occurs along some length of a pipe. The larger energy needs to be taken away from axial layers of gas, the larger should be the length of a swirling zone of a pipe" (according to the V.I. Kuznetsov hypothesis from [5]).

CONSECUTIVELY, as a result of it, during energetic separation of gas in a swirling flow it undergoes irreversible physical-chemical transformations as a result of high temperatures influence, increase of pressure and volume in the zone of the swirling flow.

For the explanatory of the given substantiation, it is necessary to determine what is the ICE working medium. Essentially it is a mixture of gases. Thus according to the Dalton law, each separate gas in a gas mixture behaves as if it by itself at a temperature of a mixture occupies all the volume of the mix. In other words, each separate gas included in a gas mix, possesses such pressure that it would have if it occupied all the volume of a gas mixture by itself. This pressure refers to as partial pressure (extract from page 20 from [3]).

The ICE exhaust gases, as a working medium, are complex non-stationary physical-chemical system with dynamically changeable in time, thermodynamic and chemical parameters. On the given level of engineering development the precise physical-mathematical model of calculation of the given thermodynamic system in dynamics of expansion does not exist, and in practice, at designing of discharge systems and mufflers, as a rule, empirical methods are applied proceeding from requirements of an object of designing. In this connection, further a simplified physical-chemical model of a working medium, and derivable thermodynamic cycle proceeding from the achieved research level is stated.

The basic products of combustion in ICE are vapor of water and carbonic gas. They are products of complete combustion and most significant in the volumetric relation. Therefore, the chemical-thermodynamic transformations over them are most essential for the achievement of the declared aggregative-phase thermodynamic cycle.

Also, except for the products of complete combustion - carbonic gas and vapor of water, ICE exhaust gases contain substances having toxic effect. They are products of incomplete combustion of fuel: carbon oxide CO, hydrocarbons of various structure and structure CH, including vapor of non-burned down fuel, soot, and also nitric oxides of air NOx, formed at high temperatures during combustion.

Carbon oxide CO is formed at the burning of a rich mixture owing to lack of oxygen for complete oxidation of fuel. The formation of hydrocarbons CH is connected to delay and even by the complete termination of reactions of oxidation in a thin wall layer of a fuel-air mixture in the combustion chamber. Intensive heat dissipation from gas to the walls reduces the speed of burning so that the fuel has no time to burn down. Nitrogen, chemically inert under atmospheric states, at high temperature reacts with oxygen. The reaction occurs rather quickly at the temperature more than 2300 K, and generally, nitric oxygen is formed. In atmospheric air, there is a slow oxidation of NO to nitrogen dioxide NO₂ the toxicity of which is much higher than the toxicity of NO (extract from page 36-37 from [6]).

From (page 40-49 from [7]), it is known about the reactions of fuel oxidation. The ratio between the quantity of initial products (fuel plus air) and products of combustion can be found from the equations of chemical reactions at the following assumptions: all chemical compounds consist of atoms of separate elements bound among themselves in certain numerical ratio; during chemical reactions the atoms keep individuality and only their regrouping occurs.

The complete oxidation (combustion) of molecule CxHy up to the final products (carbon dioxide CO₂ and water vapor H₂O) is described by the equation (the reaction initial data and final products are given in kilomoles):

CxHy + (x+y/4) O₂ = x CO₂ + y/2 H₂O (further there are formulas and their explanation from page 40).

The minimal quantity of oxygen kilomoles Lo, necessary for complete fuel combustion and determined on the basis of the given equation, refers to as stehiometric.

If the quantity of oxygen is less, the oxidation will be incomplete. At the incomplete oxidation (combustion), a part of carbon is oxidized only up to CO (carbonic oxide) and a part of hydrogen does not burn down at all.

With the reduction of quantity of oxygen in FAM (fuel-air mix) in products of combustion, the contents of CO and H₂ will be increased and will decrease the contents of H₂O and CO₂. With a share of carbon, oxidized up to CO, equal to a share of the unburned hydrogen in products of combustion will contain only carbonic oxide CO and unburned hydrogen H₂.

The volumes of initial components and products of combustion can differ because of the difference of number of kmoles of a fresh charge M1 and products of combustion M2.

In complete combustion an increment of number of kmoles and the increase of volume of combustion products occur only because of oxidation of hydrogen and formation from one molecule O₂ of two molecules H₂0 (see equation). In incomplete combustion, the increment of volume is larger, as besides oxidation H₂ in H₂0 (one molecule 0₂ - two molecules of H₂0) occurs incomplete oxidation of C in C0 (one molecule 0₂ - two molecules C0).

For the realization of an operational cycle the essential importance have such properties of fuels as combustion and evaporation value, heat capacity, thermal conductance etc. Combustion value is the most important among them. The burning of fuel concerns to exothermal reaction, i.e. goes with calorification. Combustion value is a thermal effect of reactions going with formation C0₂ and H₂0. As water in combustion products can be in vaporous and liquid state accordingly the lowest and maximum combustion value are introduced, the difference between them is equal to the latent heat of water evaporation; Ni = Nv - 2,512 M H₂O.

In reciprocating ICE and gas turbines the combustion products are not cooled up to temperature at which a condensation of water vapor occurs, therefore in calculations the lowest combustion value is accepted Ni.

In engines with external carburetion the surplus of air corresponding to oxidation of all fuel up to C0 practically never takes place; therefore carbon in products of combustion is absent. In diesel engines states of carburetion are those that there are zones where the given surplus of air is more and during combustion, the unburned carbon can be formed.

In addition, at high temperatures the products of combustion are decomposed to more simple components. This process refers to as thermal dissociation; it occurs with absorption of heat.

For example, the dissociation of CO₂ and H₂O is described as follows:

2C0₂ = 2CO + O₂

2H₂O = 2H₂ + O₂

The heat dissociation comes back (recombination) at the temperature decrease on the line of expansion (extracts from page 72 from [7]).

Certainly, the given example of chemical interaction is conditional enough. As exist a number of other products of combustion (nitric and sulfuric oxides, unburned hydrocarbons, plumbic ochre etc.) they are not taken into account in power calculations but render essential influence on the ecological characteristics. Thus, the elimination of the given harmful products of combustion is possible in the process of thermal transformation in a zone of a whirlwind up to the opportunity of ionization and subsequent recombination.

Also, "At a sufficiently high temperature when the energy of thermal movement of atoms (molecules) is great, they can ionize each other at the expense of kinetic energy of colliding particles a thermal ionization is taking place. It achieves significant intensity above temperatures - 1000 - 10000 K, for example in arc discharge, shock waves, in stars atmospheres. The degree of thermal ionization of gas as a function of its temperature and pressure is estimated by the Saha formula for weakly ionized gas in a state of thermodynamic balance.

... The process opposite to ionization is a recombination of ions and electrons - the formation of neutral atoms and molecules from them. Gas, protected from external influences, at usual temperatures because of recombination very quickly passes to a state, in which the degree of its ionization is a neglible small one. Therefore, the maintenance of appreciable ionization in gas is possible only at the action of external ionized (flows of particles of photons, heating to high temperature). At the increase of the degree of ionization the ionized gas turns to plasma sharply distinguished in the properties from gas of neutral particles" (page 229-230 from [8]).

Really, at high temperatures in one-nuclear gas a process of thermal ionization occurs - electron detachment from external electronic environment of atom. Because of this the process the mixture of negatively charged electrons, positively charged ions and electrically neutral atoms are formed. This mixture of electrically charged and neutral particles is electro conductive. The structure of this mixture is determined by pressure and temperature of the mixture. It is necessary to understand, that the ionization processes only in the initial zone of a whirlwind and occupies a small period of time before recombination and condensation. Therefore, such temperatures render insignificant influences on ICE parts.

In addition, it is necessary to note, that the passage of gases through the swirl nozzle of the swirl chamber is also bound to significant changes. So, the change of a supersonic flow in the narrowed channel of the swirl nozzle is accompanied by orificing, a number of jumps of condensation inside the channel, which cause significant changes in thermodynamic parameters of a working medium.

According to the invention, the boundary temperature states also exist. Therefore, one of realization embodiments of operation mode is that the temperature of heating is sufficient for heating up to ionization of only parts of chemical components of gas. This mode is thermally transitive, and in the designed thermodynamic system "ICE-swirl chamber" can arise only in a number of ICE modes of operations, for example at preheating. It is also possible the mode, when the heating is carried out without the opportunity of ionization. These modes are modes of particular technical embodiment of engine manufacturing. They can be both transitive during its operation, and independent operational modes for ICE particular embodiment. At the same time, it is necessary to take into account, that the physical-chemical processes of transformation above exhaust gas, can occur in each mode with some deviations. That is, for the same reaction of chemical components of an ICE working medium, the state of balance of chemical reaction depends on a number of conditions, and first of all from temperature.

Thus, during significant heating of an working medium in the swirl chamber of energetic separation in a zone of a whirlwind, chemical composing elements of a gas mixture undergo significant irreversible thermo chemical oxidizing reactions, dissociation and ionization reactions, accompanying with significant physical-chemical changes of ICE exhaust gases, as working medium of common thermodynamic system.

Because of this, in a zone of high temperatures, the basic physical-chemical and thermodynamic parameters of exhaust gas, as a basic ICE working medium is changed.

CONSECUTIVELY, as a result of it, in paraxial zone of the swirl chamber of energetic separation arises paraxial flow, having low temperature and pressure. At the expansion of a swirling flow, there comes the moment of its braking by paraxial flow, accompanying with their mutual compensation and alignment of their general thermodynamic parameters. The flows are compensated and the common working medium is cooled.

It is necessary to note, that the axial, central flow is formed as a result of complex gas-dynamic effect of separation in the swirl chamber. Initially this flow has a considerably smaller pressure than atmospheric one. It has a considerably lower temperature, up to the area of temperatures close to absolute zero on the Kelvin scale.

So from (the extract from page 188-190 from [9]) it is known, that "the cycles of swirl pipes are, as a rule, separated, i.e. the process of compression of an working medium is separated from the process of temperature division, as a result of which the cold flow used for the purposes of cooling is formed.

The process of temperature division of air in a swirl pipe (fig. V-9) can be summarily represented in S-T diagram;
1 - point describing an initial state of air before nozzle at temperature T = T o.cp. and pressure p;
2 and 3 - points describing a state of cold and hot air after process of division in a swirl pipe;
4 - point describing a state of air inflow in the compressor.

The cycle consists of processes 1-2 and 1-3, proceeding simultaneously in a swirl pipe, isobaric processes 2-4 and 3-4 and process of compression 4-1 in the isothermal compressor. At adiabatic compression in the compressor instead of process 4-1 it is necessary to consider processes 4-5 and 5-1.

The flow of air, acting tangentially to an internal surface of a pipe, makes rotary movement in relation to an axis of a pipe. The peripheral part of the formed swirling flow moves along the hot end 3 (fig. V-10) to chocker 4, where the part of a flow is deduced from a pipe on a ring crack at temperature Tr. The other part of an air flow moves along the central part of a pipe by counter flow to a peripheral flow and is deduced through an aperture 1 of diaphragm at temperature Tx. Power exchange between the central and peripheral parts of a swirling flow is characterized by essential irreversibility, therefore the process of expansion of a cold flow of air is not represented by isentropic curve (1-2 ', see fig. V-1), but irreversible polytrack 1-2)".

Thus, inside the swirl chamber of energetic separation occur complex irreversible processes. Moreover, the essential importance for thermodynamics of the swirl chamber has the fact, that the process exhaust, as a rule, proceeding from cyclicity of operation of the ICE basic type, also is cyclic. That is, the working medium has the precisely certain individual parameters of weight, temperature, pressure etc. And all possible transformations for the given unit of a working medium occurs in one cycle. For this cycle with the given working medium, the consecutive changes are made which are irreversible and transforming a working medium.

It is necessary to note, that the swirl chamber of energetic separation used in given cyclic type of engine, in the simplest embodiment, is self-vacuumizing. That is, used for production of minimal temperatures inside the pipe, operating, as a rule, without cold flow tap (self-vacuumizing swirl pipes, where M = 0). (according to page 188 from [9]). Also it is necessary to understand, that the most known and studied from a level of engineering, the swirl chambers of energetic separation --are refrigerating swirl devices, in which compressed air is constantly supplied, at constant pressure and there is a constant auto modeling mode. In the refrigerating engineering, there are some hypotheses of swirl effect and some physical and mathematical models of swirl chambers of energetic separation calculation. In this case, the ICE working medium considerably differs in physical-chemical parameters from compressed air. In addition, swirl chamber of energetic separation operates in complex and little-studied for the given period of experimental researches mode. It is a cyclic self-vacuumizing auto-modelling mode. Therefore, in view of absence of theoretical bases and physical and mathematical model of the given process, it can be presented in the simplified alternative as follows.

At the beginning, there is a process of creation of a swirling flow. So, proceeding from an example reciprocating ICE, the exhaust gas discharges with subcritical speeds (600-800 M/S) in swirl nozzle of the chamber, where is trottled and warmed up. Thus, its basic thermodynamic parameters, in particular temperature and speed of the discharge change. It is possible to assert the opportunity of existence of hypersonic gas flow in a primary zone of a whirlwind. Actually, in this zone significant warming up of ICE working medium is also carried out. Further, having formed a whirlwind and intensively rotating along the walls of the chamber, the given portion of gas extends and loses speed, temperature and pressure. Thus, there comes the moment, when all (or nearly all) the exhaust gas from the cylinder gets in the swirl chamber. That is, all the weight of gas, for a particular individual cycle of exhaust, discharges from the cylinder. There is some under pressure in the cylinder, because of wave process of the discharge. Thus, the there is no further discharge of gas from the cylinder. A portion of gas inside the swirl chamber is not pushed by anything, and its flow during some period of time still occurs mechanically. During this temporary period, in paraxial zone already exists paraxial flow, having low temperature and low pressure, down to a significant vacuum. Further, there is a process, at which, the given paraxial flow will simultaneously penetrate into the cylinder, and simultaneously inhibit the swirling flow. Figuratively, it operates as though it is sucking it back. As a result of it, the swirling flow is completely stopped and compensated, i.e. pressure and temperature of flows are leveled in a single volume. As a result of it, the working medium of a certain individual operational cycle, certain molar weight, in a certain total volume of common thermodynamic system aquire some common parameters of temperature and pressure. So, proceeding from an available scientific level, it is possible to explain approximately the given complex thermodynamic process on alignment of pressure, temperature in common thermodynamic volume of the swirl chamber and ICE expansion machine. Thus, all consecutive processes occur very quickly in time. This swirling thermodynamic process is dynamic on time, complex and non-stationary in physical-chemical model. This process occurs at one stage in single closed volume, i.e. as isochoric. In addition, at the other stage, with the alignment of pressure, i.e. as isobaric.

Certainly, the given process is little-studied at the given level of engineering. At the same time, it is possible to assert, that in a cyclic self-vacuumizing swirl chamber of energetic separation a process of mutual compensation of thermodynamic parameters of exhaust gas in a swirling flow under the influence of paraxial flow on it occurs.

CONSECUTIVELY, because of it, at the mutual compensation of flows the quick and significant cooling of ICE working medium is achieved. As a result of it, ICE working medium undergoes thermodynamic processes, connected to the influence of low temperatures at certain pressure with an opportunity of condensation of ICE exhaust gases, or a part of their chemical composing elements. The condensation, as a process of transition of substance from gaseous state to the liquid one, is accompanied by heat tap and the change of specific volume. The latter circumstance allows ensuring the most useful use of heat of these vapor condensation formed at fuel burning, i.e. to pass a dew point. This state is a consequence of significant and quick cooling because of energetic separation of flows in the swirl chamber of energetic separation.

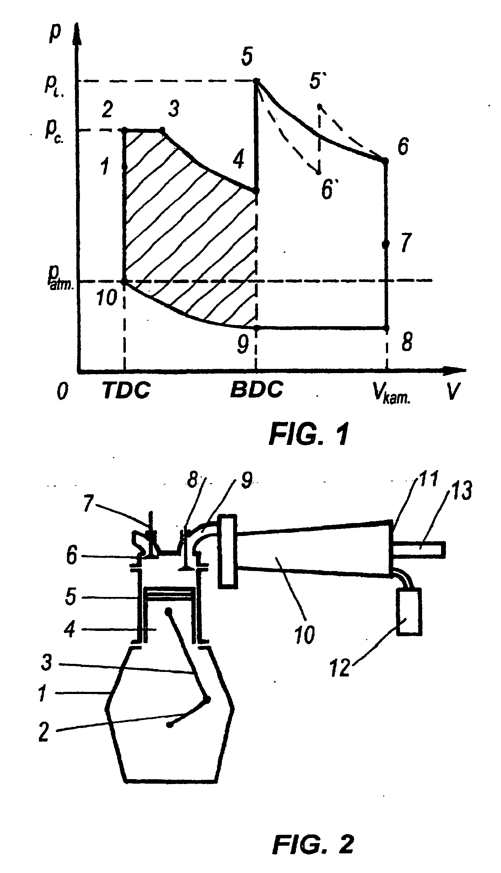

So, from (from page 100-101 from [8]); "Any substance is possible to transfer in a gaseous state by appropriate selection of pressure p and temperature T. Therefore, the possible area of existence of a gaseous state is graphically convenient for representing in variables p-T (in p-T diagram, fig. 1). When T is below the critical Tc, this area is limited by curves of sublimation (subliming) 1 and vaporization 2. It means, that with any p below critical p_{cr} there is temperature T, determined by a curve of sublimation or vaporization, exceeding which the substance becomes gaseous. At temperatures below the temperature of a threefold point Tp the gas can be in balance with a firm phase of substance (on curve 1), and between a threefold and critical point K - with a liquid phase. Gas in these states is usually named a vapor of substance.

At T below Tc it is possible to condense gas - to transfer it in other aggregative state (firm or liquid), for example raising pressure.

At T> Tc the border of gaseous area is conditional, as at these T phase transformations do not occur. Sometimes for conditional border between gas and liquid at supercritical T and p the critical isochor of substance (fig. 1) is accepted, in the immediate proximity from which the properties of substance change, though not stepwise, but especially quickly.

Owing to the fact that the area of the gas state is very extensive, gas properties with the change of T and p can vary over a wide range... ".

It is necessary to define: "the amount of heat, which is necessary to impart at the constant pressure of 1 kg of a liquid heated up to the temperature of boiling for its transformation in dry saturated vapor, refers to as the latent heat vaporization or simply heat vaporization...

In inverse process, which refers to as condensation, dry saturated vapor at the beginning becomes damp, and then completely turns into a liquid...

For transformation of 1 kg of dry saturated vapor into a boiling liquid of the same pressure from it is necessary to extract heat equal to heat vaporization. "(extract from page 77 from [10]).

Thus, the heat vaporization extraction from ICE working medium produces additional opportunities of increase of ICE thermal efficiency. In addition, as a thermal process it is accompanied by a change of specific volume (density) of a working medium and creation of vacuum in common thermodynamic volume.

Taking into account, as it was mentioned above, that at the normal course of process of burning, at the normal stochiometric composition of a fuel-air mixture (FAM), the most volumetrically significant parts of ICE exhaust gases are vapor of water and carbonic gas. In this connection, it is necessary to consider the processes of their condensation in a closed volume.

It is necessary to note, that water, as a working medium of thermal and refrigerating machines is widely applied in engineering. So, the density of water vapor is many times less than the density of water (at the temperature of 373, 15 K, for example, in 1600 times). The thermodynamic properties of water and water vapor are interconnected, and at some ratio of pressure and temperature in the given volume, the isobaric process of heat extraction from damp vapor is possible, which results in condensation (transition of a dew point). Such heat extraction in practice simultaneously represents the isothermal process too. The given process is easily feasible, and represents a process similar to the process of vapor condensation of water in steam plants. Plants of Carnot cycle, Renkin cycle and regenerative cycle operate so, it is known from a level of engineering.

Concerning carbonic gas from (page 172-173 from [3]) it is possible to show parametrally individual example evidently showing an opportunity of condensation. "In fig. 6-10 the dependence connecting volume V and pressure p for carbonic acid at temperature T=20 C is shown. Specific volume of carbonic acid at temperature 20 C and pressure 98 κPa (1 kgs/sm2) is equal to 561,8 sm3/g 9 (point 1 in fig. 6-10). During compression the specific volume strongly decreases. After the pressure becomes equal to 5733 kPa (58,46 kgs/sm2), i.e. the pressure of saturation of carbonic acid at temperature of 20 C (point 2), the process of condensation of carbonic gas begins; thus the specific volume of carbonic gas V=5,258 sm3/g. As it is known (see 5-5.), this isothermal process is at the same time isobaric therefore the isotherm sector, corresponding to phase transition is located in p-V diagram horizontally. After the process of condensation is finished, the specific volume of the saturated liquid (point 3) V will be equal to 1,258 sm3/g. At the further compression of a liquid phase its volume, as it was already mentioned above, changes rather poorly; for example, at the pressure of 9807 kPa (100 kgs/sm2) the specific volume of liquid carbonic acid V will make 1,18 sm3/g (point 4).

At the reduction of pressure, affecting on a liquid, the substance will pass the same states in the reverse order; it will extend up to the point of boiling, there will be evaporation, and then the obtained vapor will extend up to atmospheric pressure."

As it is visible, at such parameters of pressure and temperature, specific volume of carbonic gas decreases approximately in 470 times. Certainly, the given example is only parametrally individual, and in real process at operation given ICE, parameters of pressure and temperature others. At the same time, it is clear enough that at some ratio of thermodynamic parameters in a single thermodynamic system "the ICE-swirl chamber", in its closed volume, is possible to condense carbon dioxide component of exhaust gas. Thus, taking into account a significant change of the specific volume of gas the in given closed volume of common thermodynamic system it is possible to obtain a significant and steady vacuum.

In refrigerating industry, the operational devices for cooling and condensation of products of combustion are widespread. For example, from (page 4-14 from [11]) it is known, that the similar thermodynamic transformations with a working medium, similar on chemical structure, are carried out in heat and cooling power machine (HCPM), consisting in combined form from: ICE, as the gas turbine, complex incorporated system of boiler, economizers, sources of water supply, pumps, generators, turbine expanders, separators etc. Thus, the coproduction of heat, electrical energy and carbonic acid (i.e CO is processed up to a firm phase). In the considered machine the combined cycle consists of two straight lines - the cycle of gas-turbine unit (cycle of a gas step) and a cycle of steam-turbine unit (cycle of a steam step) and one reverse (refrigerating cycle), similar to the cycle of the gas-refrigerating machine. That permits to achieve the opportunity of the use of the maximum calorific efficiency of fuel, the absence of heat loss with discharge gases, transformation of products of combustion in refrigerant and production of firm carbon dioxide by freezing-out from the products of combustion.

Thus, from the level of engineering the offered thermodynamic process of cooling and condensation of ICE products of combustion is known, mastered, and widely applied in refrigerating engineering. However, it is achieved by more complex stationary systems and is focused on other results.

It is also possible, physical-chemical process of dissolution of chemical components of exhaust gases in its condensated part. From the general level of physical chemistry, the following is known.

Like this, from (page 233-234 from [12]) it is known that "the state of balance between binary (bicomponent) solution and one of its components, composing a separate phase, is widely distributed in real systems and well studied. The given balance characterizes the major physical-chemical property of substances - solubility... It is obvious, that both single-component phase (pure component) and the coexisted solution can be gaseous, liquid and firm. The typical examples of balances binary solution-pure component are the saturated solution of a firm substance in a liquid, which is taking place in the balance with the given firm substance, and solutions of gas in a liquid or in a firm substance consisting in balance with the given gas. Obviously, the solubility of gases in firm and liquid substances depends on both temperature and pressure. It is simultaneously necessary to take into account, that when contacting these two condensed phases the mutual solubility of components (especially in systems liquid-liquid) is possible, therefore in the balance can be not a pure component with a solution, but two solutions: the first component in the second and the second component in the first."

Thus, the dissolution of one chemical composing component of the engine exhaust gases in the other is possible. At the same time, the components can possess different physical-chemical parameters, both for chemical activity, and aggregative state. The dissolution of dioxide component of exhaust gases in water component with the formation of a solution of carbonic acid is possible. The same is possible, for example, at a primary volumetric condensation of a water component of exhaust gases. It is determined by operational adjustments of swirl chambers of energetic separation. That is, if the primary chamber is adjusted exclusively for the primary condensation of a water component of exhaust gases. In this case, water acts as absorbent, which is in a liquid state. Moreover, the gases, being in vaporous state, act as coolants. The given process is transient and also has a nature of volumetric process, or volumetric-wave in a closed volume of the swirl chamber and ICE. Thus, this process of absorption occurs with heat extraction. In this connection, it is necessary to understand, that the process of condensation itself consists of a number of consecutive accompanying processes. These processes are poorly studied at the given stage of researches and defined as the integral accompanying processes, connected to condensation. Further, they are declared as condensation.

Other components of exhaust gases, for example nitrogen compounds, are insignificant in exhaust products in share relation and compensated as a result of common process of transformation of exhaust gases in a zone of high and low temperatures.

One of the embodiments of ICE realization, in which the swirl chambers of energetic separation are installed serially, one after another, assumes the opportunity of such adjustment of their thermodynamic parameters, at which, for example, the first one was adjusted exclusively for carbon dioxide component and the second one for steam-water one, or vice versa.

It is also necessary to understand, that the swirl chamber interadjusted for thermodynamic parameters should effectively condense the largest part of ICE exhaust gases for a cycle. With the purpose of productivity increase of the swirl chamber, on the other embodiment of realization of the invention, the chambers of energetic separation installed in parallel are applied.

In any case, after the fulfillment of an individual cycle, the working medium, physically transformed during the cycle, condensed because of cooling are utilized through drainage system. A working medium of the given particular individual cycle, having proceeded the stages of cooling and condensation, is utilized as a liquid through drainage system. The drainage system represents the known and routine in engineering decisions, generally: a system of liquid drains tap, filtration, separation, orificing, bypass valves, dehydration box - store for recycling etc. It is possible, that some part of the condensed working medium, that has not had time to flow down from walls of chambers, will be transformed in the subsequent cycle at heating and cooling.

In the other embodiment, the other part of exhaust gases, as the working medium, not condensed at cooling, and having a gas aggregative state is discharged through tap system of non-condensed part of exhaust gases. The given system represents also the decisions known in engineering and consists, generally, of gas chockers and gas-dynamic locks, valves, resonators, mufflers, connecting pipes etc. The major task of the given devices consists in lockout of volume of common thermodynamic system with the purpose of prevention of gas offense from atmosphere at the moment of vacuum action. And, accordingly, the free discharge of the exhaust gases in the direction out of the swirl chamber to atmosphere. Thus, a single closed volume is conditionally-closed at any stage of the cycle, after the termination of which, as a rule, an alignment of pressure of the closed system with atmosphere occurs, for example at the moment of valves overlapping.

It is necessary to note, that in different modes of ICE operation, the combination of both ways and systems in the time of operation is possible.

CONSECUTIVELY, as a result of this, the condensation of a working medium results in creation of significant on the module, long on time of action, steady state of vacuum in the closed volume of single thermodynamic system "ICE-swirl chamber". It is known, that "the vacuum - state of gas at the pressure of less atmospheric" (from page 69 from [8]). It is necessary to note, that in this case really steady vacuum is understood, as a state of gas in the field of low temperatures. In addition, it is different as a state, from wave underpressure in the process of exhaust. The existence of the given vacuum in time is determined as a minimum for the period of stabilization of thermodynamic parameters of system for a particular circular thermodynamic cycle. Thus, depending on the embodiment of ICE performance and its adjustments, the existence of residual vacuum in a closed volume "ICE-swirl chamber" for the subsequent cycle is possible. Thus, some change of thermodynamic parameters of single system is possible. In the other embodiment, the alignment of vacuum with pressure of external environment after a cycle is possible, for example, at the moment of ICE valves overlapping or through the tap system of non-condensed part of exhaust gases.

CONSECUTIVELY, as a result of it, an engine makes a positive power stroke, as a vacuum engine.

It is necessary to note, that the term "vacuum engine" is conditional. Moreover, first, it has such a device as a basis, which has a chamber of volumetric expansion and a working medium, capable to make some stroke or moving at the expense of some forces from the action of vacuum. As the result at the influence of forces for the movement of a working medium of this machine, the positive work is produced. Thus, this engine has an opportunity of output of this work from a working medium for its transfer to its consumers. The elementary example of such device is a piston machine. At the creation of vacuum in the top part of the cylinder, the piston makes a positive power stroke from BDC to TDC. Thus, if the piston is connected through crank mechanism to the power shaft, then the power can be transferred to consumers.

Also, the examples of such devices can be various gas-turbine, turboshaft systems, rotary-piston systems (such as Wankel's), system with spiral rotors (such as Lischolm's) and other decisions known in engineering.

It is necessary to note, that any ICE has a chamber of volumetric expansion and, as a rule, if it is a cyclic process, the chamber of volumetric expansion can simultaneously carry out the functions of expansion device, in one stroke, and of vacuum engine, in the other stroke.

However, it does not mean, that such decisions are solely possible. The operation machine ICE, according to the given invention is possible, in which chamber of volumetric expansion ICE and vacuum engine, are separate devices structurally combined in the single engine. Thus, the engineering performance of the vacuum engine is possible, as a rule, at the expense of the difference of pressure between the atmospheric pressure of environment and the vacuum inside the closed volume in a cycle.

CONSECUTIVELY, as a result of it, the new qualitative parameters of thermodynamic cycle of ICE, as a thermal machine, are achieved.

It is necessary to note, that the Carnot cycle consists of two adiabats and two isotherms. The realization of adiabatic processes does not represent specific difficulties for practical purposes. A deviation of real adiabatic processes of expansion and the compression from isentropic curve caused by irreversibility of processes of flow, certainly, result in reduction of thermal efficiency of the cycle; however, this reduction is not too great. At the research of ICE ideal thermodynamic cycles the amount of heat input and extraction, the basic parameters of state in distinguished points of a cycle, the thermal efficiency of a cycle relate to the number of definable values.

An internal combustion engine represents such thermal machine, in which heat input to a working medium is carried out at the expense of the burning fuel inside the engine. A working medium in such engines at the first stage is air or mixture of air with easily inflammable fuel, and at the second stage - products of combustion of this liquid or gaseous fuel. Taking into account, that the most volumetrically significant part of a working medium, according to the invention, are namely products of combustion, water and carbonic gas, and transformation of them, then it is necessary to determine the following.

The primary preparatory steps and systems of engines are standard and unchangeable within the frame of the offered invention. In this connection, according to the physical essence of cyclic processes, three basic kinds of piston engines cycles of internal combustion are distinguished: the Otto cycle (combustion at a constant volume); a Diesel engine cycle (combustion at constant pressure); Trinkler-Sabate cycle (combustion at a constant volume and then at a constant pressure).

Generally (see fig. 10-2 on page 321 from [3]), the idealized closed cycle is thermodynamically equivalent to Otto cycle, consists of two adiabats (adiabat of compression 1-2 and adiabat of expansion 3-4) and two isochors (isochor of heat input 2-3 and isochor of heat extraction 4-1). The work, made by the engine in one cycle, is represented by the area 2-3-4-1-2.

Generally (in fig. 10-6 on page 324 from [3]), as it is visible from this diagram, the idealized cycle of a Diesel engine consists of two adiabats (adiabat of compression 1-2 and adiabat of expansion 3-4), isobar 2-3, on which the heat input q1 is carried out from a hot source, and isochor 4-1, on which the heat extraction q 2 to a cold source is carried out.

Some kind of "a hybrid" of Otto and Diesel engine cycles is the cycle with the mixed combustion, or the Trinkler-Sabate cycle (see fig. 10-10 on page 327 from [3]). In the working cylinder the air is compressed adiabatically at the expense of handwheel inertia, sitting on the engine shaft, thus being heated up to the temperature ensuring the ignition of liquid fuel, submitted in antechamber (process 1-2). The form and arrangement of the last promote the best mixture of fuel with air; therefore there is a fast combustion of a part of fuel in a small volume of antechamber (process 2-5). Due to the increase of pressure in the antechamber the formed in it mixture of the unburned fuel, air and products of combustion forces the way in the working cylinder where delayed burning of the stayed fuel occurs accompanying with the movement of the piston from the left to the right at the approximately constant pressure (process 5-3). Upon termination of fuel combustion the further expansion of products of combustion (the power stroke) occurs adiabatically (process 3- 4), then the exhaust gases discharge from the cylinder (process 4-1). Thus, in a cycle with the mixed combustion heat input is carried out at the beginning along isochor, and then along isobar.

Reasoning from the given physical concepts, it is necessary to explain the offered, according to the invention, thermodynamic cycle. First, the given cycle is aggregative-phase. That is, the working medium in the course of input or heat extraction processes passes critical points of phase transition and for some time passes in the following boundary aggregative state. Such transitions, at the beginning, occur at a significant heating in the zone of a whirlwind, because of which the transition of weakly ionized gas in an aggregative state with irreversible physical-chemical transformations of chemical components of a working medium is possible. Further on recombination and significant cooling in paraxial flow occur. Moreover, during the cooling ---a condensation of chemical components of a working medium takes place. That is the process of phase transition from gaseous state in a liquid. Accordingly, the given thermodynamic processes of aggregative-phase transitions are accompanied by changes of heat and specific volume of a working medium of the given thermodynamic system.

According to the invention, boundary temperature and phase states exist as well.

In one of the embodiments of realization of operation mode, when temperature is sufficient for heating to ionize only a part of the gas chemical components. This mode, as a rule, is transitive and in the designed thermodynamic system "ICE-swirl chamber" can arise only in a number of modes of ICE operations, for example during warming-up. At the same time, it should be taken into account, as the physical-chemical processes of transformation of a working medium can occur with some deviations.

In addition, in the other embodiment of realization of the operation mode, the similar mode in a low-temperature zone is possible. So only a part of chemical components of an ICE working medium can be subject to condensation. In this case the non-condensed part of ICE exhaust gases, as working medium, is discharged through the system specially designed for it.

Also, it is a possible of realization of operation mode, when the thermodynamic parameters of system are calculated so, that in a zone of high temperatures the ionization does not occur. Thus, all the thermodynamic system is adjusted exclusively to the phase transition from an aggregative state of the heated up gas to the liquid state. Here are even parts of chemical making elements of a working medium.

The process of cooling of an ICE working medium up to the firm phase is also possible, but as the liquids are poorly compressed, the reduction of their volumetric share in a closed volume is unsignificant and does not produce the significant effect on the creation of vacuum.

Actually, the processes inside such thermodynamic system are very complex, and at the given stage of development of experimental research are not studied at all. In this connection, the simultaneous existence of all specified operation modes, depending on power setting, is most probable.

In fig.1 the offered aggregative-phase thermodynamic cycle is represented in p-V coordinates. The given cycle represents the idealized cycle of the appropriate display diagram for a unit of weight of a working medium. In the physical essence, the given cycle is the ICE combined cycle, as a heater; with a cycle of the swirl chamber, as a refrigerating unit. The thermodynamic essence of the process consists, thus, in the fact that products of fuel combustion turn not only in a heating agent, but also in the cooling agent, as in the refrigerating machine. Accordingly, the aggregative-phase transitions of a working medium of the engine are accompanied by changes of specific volume of a working medium and changes of internal heat of thermodynamic system, in which a change of an aggregative state of the given working medium occurs.

Therefore, heat input at the expense of combustion of a fuel-air mixture is carried out either along isochor, or along isobar, or consecutively along isochor, then along isobar. That corresponds to the cycles of Otto, Diesel and Trinkler-Sabate engines, accordingly. It is explained by the fact, that the initial strokes of the offered engine are equivalent with usual engines. In the diagram, the heat input to a working medium is shown in isochoric section 1-2 and in isobaric section 2-3, with some pressure of combustion p_{c}.

Further, there is the process of adiabatic expansion of a working medium in ICE expansion unit, in the simplest case, in the piston stroke from a TDC point to BDC on the diagram. On the display diagram is an adiabatic section 3-4. The given diagram section is also is similar to the diagrams of the known ICE designs.

Further, the essential differences inherent exclusively to the given thermodynamic cycle follow. It is explained by the fact, that the swirl chamber of power expansion has its own thermodynamic parameters and its own display parameters; typically as a refrigerating unit. Thus, its thermodynamic parameters are incorporated in a single thermodynamic system with ICE parameters. Moreover, the swirl chamber carries out thermodynamic transformations at the same working medium, gas of the same weight, but typically as the coolant. Therefore, in the given sector of the display diagram, connected with isochoric heat extraction, as in a standard cycle, the working medium undergoes the following significant changes.

At the beginning, the working medium, after opening the discharge valve, discharging at the speeds of 600-800 m/s gets in a swirl nozzle, forms a whirlwind, in which is warmed up considerably, increases pressure and extends further along the chamber. In the display diagram this sector is marked as 4-5. The given sector of the display diagram is actually vertical, or conditionally vertical. That is, it's an isochoric heat input. It is in this period a working medium undergoes significant physical-chemical transformations as a result of significant heating. In the given sector also irreversible thermal-chemical reactions, dissociation, and then ionization of a working medium occur in one mode, or a part of chemical components of a working medium, in the other mode. That is, in the given sector an aggregative-phase transition of gas to a state of weakly ionized gas occur. It is the top border of aggregative-phase transition. Point 5, as a point of pressure of ionization pᵢ, can be above than points of heat input 2 and 3, in the case of transition to a weakly ionized aggregative state, in the first embodiment of the mode of realization. In case of partial ionization of chemical components of exhaust gases, point 5 can be a little bit higher, lower or equal. In the other embodiment of realization, when the exhaust gases heat up without an opportunity of their ionization, point 5 will be equal, or lower than the level of points 2 and 3. In addition, it is necessary to understand, that the vertical position (isochority) of isochoric input sector of heat in the diagram depends on the thermodynamic characteristics of the swirl chamber. So in particular, at the use, according to one of the alternatives, of serially installed swirl chambers, point 5, will have some downstream points 5', 5", 5"' etc., each of them will correspond to a maximum point of heating in each chamber.

Further, the free whirlwind, extending along the chamber, gradually loses the speed of rotation, pressure, and temperature. A smooth reduction of pressure at expansion along the volume of the swirl chamber occurs. There is adiabatic sector 5-6 in the display diagram. In the given sector complex transformations of reverse phase transition, in particular recombination occur. Visually, in case of several chambers, the sector of the diagram 5-6 will look as "saw" 5-6 '- 5 '-6. In the other embodiment, where the swirl chambers are parallel installed, generally, there will be an imposing of two diagrams from two chambers on point 5. As a whole, recognizing that the given diagram represents the idealized cycle, hereinafter it is possible to neglect these divergences and to consider the diagram of a cycle guided by common thermodynamic parameters of the incorporated system.

Further, a process of compensation of cold paraxial flow, having low pressure, and a swirling flow, having lost pressure and temperature occur. It is necessary to note, that depending on adjustment of the swirl chamber of energetic separation, the given process can be smooth, or shock, that is occurring quickly. Taking into account, that the diagram represents the idealized cycle, the transient, or shock process of compensation is taken into account. This moment corresponds to point 6 of display diagram. Position with respect to point 4 can be higher, below, or equal.

Further, significant vacuum and low temperatures in paraxial flow, having changed the thermodynamic parameters after compensation with a swirling flow, considerably change temperature and pressure of common thermodynamic system "ICE-swirl chamber". This change occurs at the constant volume in area of low pressure and low temperatures. In the diagram it is the isochoric sector 6-7. It is a sector of isochoric heat extraction. That is, at the given stage of thermodynamic cycle, a heat extraction from the heated up working medium occur.

Further, the changes of a state of a working medium at the given cooling reach a critical point 7, which is the point of aggregative-phase transition of gas to a state of liquid. Depending on the parameters of system the point of phase transition 7 can be higher, lower or equal in pressure with a level of atmospheric pressure. The given phase transition is accompanied by significant heat extraction from a working medium, i.e. heat of evaporation (condensation). The phase transition of water vapor to a liquid can is accompanied also by volumetric dissolution of other chemical components of a working medium. Thus, additional heat extraction is also possible at the expense of absorption of these elements in water. However, at the given stage of research the given effect is poorly studied.

Therefore, in spite of the fact, that ICE exhaust gases - the mixture of separate chemical elements with different points of condensation, here the simplified model is accepted, that the points of phase transition are common for all working medium.

The aggregative-phase transition of gas in a liquid is accompanied by significant reduction of specific volume, occupied by it, and accordingly, in common thermodynamic volume by reduction of pressure, which is much lower than atmospheric pₐₜₘ. That is by creation of significant, steady vacuum. In the diagram, it is an isochoric sector 7-8. At the same time beginning from sector 6-8 gas is extended as much as possible and occupies all the volume of a single thermodynamic system, up to V_{cam}.

Further, there is a sector of isobaric heat extraction 8-9. It is necessary to note, that the gas turbines, as a kind of ICE, have a similar sector of heat extraction. It is connected to the absence of exhaust cycling. For cyclic ICE, the presence of such sector of heat extraction essentially lowers temperature border of a cycle, which increases efficiency.

And a sector of a positive power-stroke fulfillment by the vacuum engine from BDC, point 9 in the display diagram, up to TDC, accordingly, point 10. In the display diagram it is an adiabatic sector 9-10. Thus, it is necessary to note, that the stroke of the vacuum engine is possible, as a rule, up to pressure of alignment with atmospheric one.

Further, sector 10-1 closes the cycle. It is an isochoric sector of heat input. In a real engine in the given sector a compression of a fresh charge and its ignition occur. Generally, sector 10-1 and sector 1-2 can be considered as a single sector of isochoric input of heat.

The work, which is carried out by a working medium in a cycle, is limited to a sector of the diagram 1-2-3-4-9-10, i.e. by the maximal points of a stroke of ICE expansion machine from TDC to BDC, and is shaded in the diagram.

Certainly, at particular ICE performance the significant deviations of the display diagram from a real cycle, from the offered idealized one are possible. As it is necessary to note, that a number of sectors of the idealized cycle can have changes, for example of sectors 4-5, 5-6, 6-7, 7-8, 8-9 that is connected to operational adjustments of the swirl chamber of energetic separation.

Generally, the display diagram of the incorporated thermodynamic system consists of heat input isochor 1-2, heat input isobar 2-3, adiabat of expansion of a working medium 3-4, isochor of heating of a working medium in a swirling flow 4-5, adiabat of expansion of a swirling flow 5-6, isochor of heat extraction up to the point of condensation 6-7, isochor of heat extraction of condensed working medium 7-8, isobar of heat extraction 8-9, adiabat of a positive vacuum stroke 9-10, and isochor of initial heat input 10-1. Thus, the given display diagram is original, interdependent and sufficient for the description of the offered aggregative-phase thermodynamic cycle.

At the same time, distinctive feature of the display diagram of the offered aggregative-phase cycle is the presence of two incorporated thermodynamic systems: ICE, as a heater; and swirl chamber, as a cooler, and display diagrams, corresponding to them. As it is a condition of their joint thermodynamic transformation of ICE working medium, with an opportunity of aggregative-phase transitions. The basic parameters of a state of a working medium change in a range from the ionized (partially ionized) gas, in one of the embodiments of realization, up to completely condensed, in the other embodiment, and up to the partially condensed working medium in the third embodiment of realization of the invention. It results in changes of the top and bottom temperature border of a thermodynamic cycle. The given transformation is accompanied by changes of amount of input and extracted heat. Thus, the amount of the extracted heat is significant, and totally consists of heat extracted during the cooling of gas; heat of evaporation (condensation), and in a number of cases, the heat of dissolution (absorption). Therefore, taking into account a significant decrease of temperature of a working medium because of aggregative-phase transition in a liquid, the bottom temperature border of a cycle decreases. Moreover, according to one of the embodiments of realization of the invention, in a number of modes the increase of the top temperature border of a thermodynamic cycle is possible. According to the Carnot theorem, it leads to the increase of ICE thermal efficiency. As it is visible from the diagram, the area of a useful indicator work, in comparison with a standard cycle, is considerably increased.

Also, the ICE ecological parameters are increased: so exhaust gases either discharge a little, in one embodiment; or in general are not present, as they discharge as a liquid substance in dehydration box, in the other embodiment. Also, taking into account an additional increment of ICE capacity in an additional vacuum stroke, its operational parameters are increased; the smoothness of its operation is increased. Also, the exhaust noise is reduced, heat and vibroload etc. So the general positive effect of the offered invention is achieved.

Also, according to the given method, there are also other indirect, accompanying and integral positive results. For example, as a result of general cooling of a working medium inside a single system, the inner cooling of walls of the ICE combustion chamber occurs. As a result of it, the regular system of cooling operates with smaller loadings.

The given invention, as an operation mode, is mostly focused on cyclic engines, as the simplest ones for realization and the most widespread. It can be various, known of a level of engineering two and four - stroke petrol with spark ignition and diesel engines, various designs, with piston, rotary-piston, free - piston etc. executive units and compounded systems. At the same time, operation mode, as the changed thermodynamic cycle, has wider general engineering and physical importance. In this connection, it is possible, that according to the given operation mode other types of internal combustion engines can be executed, for example, such as gas turbine, liquid jet engine, or their constructive elements in various embodiments.

Thus, the consecutive and interconnected change of thermodynamic parameters of exhaust gas, as ICE working medium, as a result of energetic separation in the swirl chamber, interconnected in a single thermodynamic system with ICE with the formation of a single closed volume, results in a change of ICE thermodynamic cycle, as a mode of operation of the thermal machine. At the same time, under consecutive influence of significant high and low temperatures, a working medium undergo aggregative-phase changes. On the top temperature border with an opportunity of ionization of all exhaust gases, in one embodiment; with an opportunity of partial ionization, in the other embodiment. On the bottom temperature border, with an opportunity of condensation all exhaust gases in closed volume, in one embodiment; or their part, in the other embodiment. Accordingly, any phase transition is accompanied by changes of internal heat of thermodynamic system and changes of specific volume of a working medium. That at condensation of working medium results in creation of steady and significant vacuum in closed common thermodynamic volume. It is what achieves a new set of known attributes, as a result of which the new properties for fulfillment of an additional positive power-stroke by ICE expansion machine are revealed, as by the vacuum engine.

Thus, the given sequence makes the interrelation of essential and parametral attributes necessary for the achievement of the declared aggregative-phase thermodynamic cycle, being a physical substantiation of ICE and engine operation mode for its realization. The basic differences from analogues, both on operation mode, and on the device for its realization consist in this.

Other engineering solutions, containing the attributes stated in the formula of the invention, as distinctive ones, are not known, that allows making a conclusion about the presence of novelty and inventive level of the declared invention.

### BRIEF DESCRIPTION OF DRAWINGS.

On fig.1 the diagram in p-V coordinates of the offered aggregative-phase thermodynamic cycle is shown.

The design of the engine, realizing the offered thermodynamic cycle, is shown in different embodiments on fig.2, 3, 4.

On fig.2 the basic embodiment of the engine with incorporated in the single closed thermodynamic system engine and swirl chamber of energetic separation with drainage system and a discharge system of non-condensed part of exhaust gases is shown.

On fig. 3 there is the other embodiment of realization with serially installed swirl chambers of energetic separation.

On fig.4 there is the other embodiment of realization with the parallel installed swirl chambers of energetic separation.

### BEST MODE FOR CARRYING OUT THE INVENTION.

As an example of the device embodiment for the achievement of the specified technical effect a four-stroke piston one-cylinder internal combustion engine is accepted. Certainly, the given decision does not exhaust all the completeness of possible technical alternatives of realization of the engine and the offered mode, and is only demonstrating the essence of consecutive attributes, as the simplest embodiment.

The basic details of the engine are crankcase 1, inside of which the crank group consisting of crankshaft 2, connecting rod 3 and piston 4, making reciprocating movement in the cylinder 5 is mounted. In a cover (head) 6 the intake valve 7 and exhaust valve 8 with the appropriate drive systems are mounted. The swirl chamber of energetic separation 10, known from a level of design engineering (tangential nozzle and pipe) is tightly and rigidly attached to the flange of exhaust manifold 9. The swirl chamber, as a functional element of common thermodynamic system, has the dead closed wall 11, locking a total volume of the system from the back part of the swirl chamber. At the same time, depending on alternatives of performance, drainage system 12, or, additional tap system of non-condensed gas component of exhaust gases 13, are installed in the swirl chamber.

In the other embodiment, of a similar engine has serially installed, one after another, two swirl chambers, the primary 14, and the secondary 15. In addition, the secondary chamber is attached to the primary one through flange 16 and has the dead closed wall 17. As well as the swirl chamber in the first embodiment, the given system composed of serially installed swirl chambers has drainage system 12 and tap system of non-condensed part of exhaust gases 13.

In the other embodiment, the similar engine has parallel installed swirl chambers of energetic separation 18 and 19, installed on a common collector 20. Thus, each chamber has similar dead closed walls 11, drainage system 12 and tap system of non-condensed part of exhaust gases 13, similar to the system in the first embodiment.

The engine operates as follows. Fuel and air, necessary for its combustion, are intaken through the intake valve 7 in the volume of the cylinder of the engine, limited by the cover bottom 6, walls of the cylinder 5 and the bottom of the piston 4. It is the volume of the expansion machine of the given reciprocating ICE. The gases, formed at the combustion having high temperature, press on the piston 4 and move it in the cylinder 5. The forward movement of the piston 4 through connecting rod 3 is transferred to the crankshaft 2 in crankcase, which will transform it into rotary movement. At the given stage, the positive power-stroke is made directly at the expense of forces from the expansion of gas at the movement of the piston from TDC to BDC.

At the given stage, or cycle, and also in the previous cycles of preparatory processes, i.e. in strokes of intake of a fuel - air mixture, its compression, ignition and expansions the given ICE operates similarly, as the majority of the known designs of four-stroke ICE.

The basic differences of operation of the given ICE start in the exhaust stroke (cycle). At the moment of opening of exhaust valves 8, the exhaust gases, having significant pressure, temperature with the speeds close to sound, get in through a collector 9 to the swirl chamber of energetic separation 10, in another alternative 14 and 15, in the other embodiment 18 and 19. Where, passing through the swirl nozzle, form a whirlwind along the walls of the chamber. At the same time, the discharge occurs with the increase of speed of the discharge up to supercritical, the temperature and pressure are increased. Exhaust gases, because of significant heating in a zone of a whirlwind, undergo irreversible physical-chemical transformations. Because of the influence of a swirling flow, a paraxial flow having low pressure, low temperature is formed inside the chamber. In some volume of the swirl chamber a braking of swirling flow of the given charge of exhaust gases occurs. As a result of it, an alignment, mutual compensation of thermodynamic parameters of a swirling and axial flow occurs. At the same time, a significant cooling of common compensated thermodynamic system of exhaust gas occurs. When cooling, the chemical components of the stayed exhaust gas are condensed. That is, pass in aggregative-phase state of a liquid. The most significant of exhaust gases, for condensation, are vapor of water and carbonic gas if to take into account normal stochiometric parameters of a fuel-air mixture. Taking into account, that such change of volumetric parameters of the given weight of gas, in a closed, or in other embodiment conditionally closed volume, of a common thermodynamic system results in significant fall of pressure, it results in the creation in the given closed volume of significant, long in time of action of a steady state of vacuum. Taking into account, that the given ICE as a machine of volumetric expansion, has the piston machine connected into a single volume to the swirl chamber, then inside the cylinder 5 the vacuum is formed of the same value. Taking into account, that inside ICE crankcase 1 there is some total pressure (generally, atmospheric pressure and the pressure of crankcase gases), then as a result of such difference of pressure, the piston 4 makes an additional positive power-stroke from BDC to TDC, it is typical for a vacuum engine.

Drainage system 12 and tap system of non-condensed part of gases 13 are intended for recycling of an working medium from common thermodynamic system after the fulfilment of a cycle and represent the decisions exhaust in engineering.

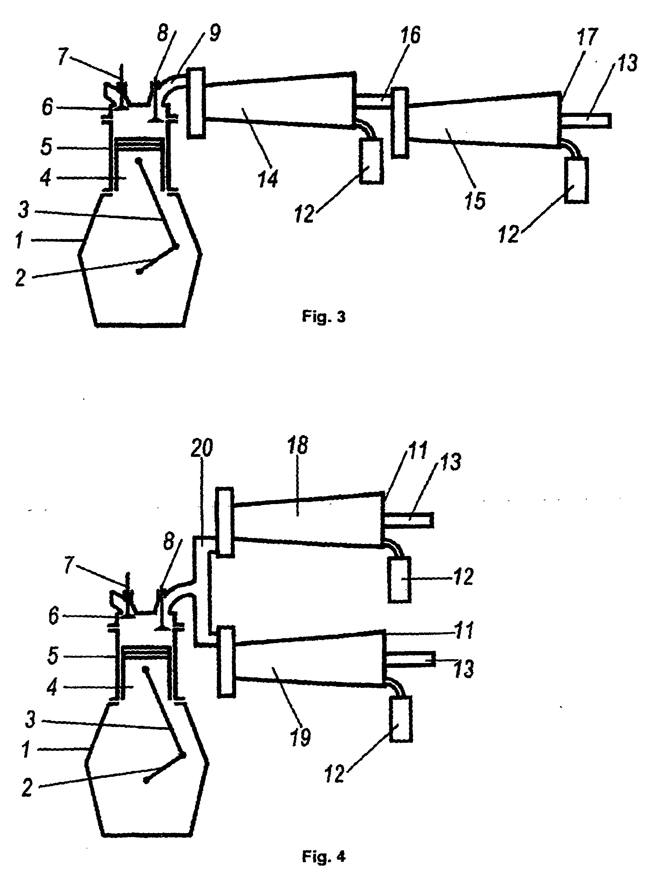

In one of the ICE embodiments, fig.3, the swirl chambers of energetic separation 14 and 15 are installed serially. Such constructive decision allows adjusting common thermodynamic system more precisely. Therefore, for example, in the primary chamber a greater heating is probable, and in secondary one, a greater cooling. As a rule, as a minimum two serially installed chambers satisfy the given attribute. As a rule, the last of the chambers can have drainage system and tap system of non-condensed part of exhaust gases.

In the other embodiment, fig.4, the swirl chambers of energetic separation 18 and 19 are installed in parallel. Such decision allows to adjust the system more precisely, since the throughput capacity of swirl nozzles is increased, thereby gas lock-out in the ICE exhaust flange is prevented. As a rule, as a minimum two parallel installed chambers satisfy the given attribute. As a rule, each chamber can have drainage system and tap system of non-condensed part of exhaust gases.

Thus, the interconnected combining in a single thermodynamic and constructive system, interdependent in thermodynamic parameters ICE and swirl chamber, with the purpose of energetic separation of operational gas, also makes a basis of the given device. Because of it, the significant thermodynamic transformations over ICE exhaust gas are carried out, as results in a cooling and condensation of exhaust gases in the closed volume, formation of vacuum in it and to an additional ICE positive power-stroke, as vacuum engine. And, accordingly, to the achievement of a new operation mode, as a technical result. It also makes the basic difference of the given ICE from the closest decision, accepted as the prototype.

The result is the increase of efficiency of the engine and its basic characteristics caused by the increase of useful work, carried out by vacuum (travel of the piston). Ecological parameters of the engine are also increased. At the operation of the engine in the given cycle the steadiness of the crankshaft stroke raises, that is favorably reflected at the operation of that mechanism connected to the engine.

### INDUSTRIAL APPLICABILITY.

The offered aggregative-phase thermodynamic cycle, as an operation mode, is carried out on the basis of the known designs of internal combustion engines. Structurally, technical embodiments of the offered internal combustion engine are based on the known from the level of engineering decisions and technologies, exhaust in industry. The offered engine does not require significant alteration of an ICE design, and corresponds to the level of usual worldwide infrastructure of service. In operation the engine does not require new fuel and has its more economic consumption. It also confirms the opportunity of commercial applicability of the invention.

### INFORMATION SOURCES.

### (Square brackets in the text of the description)

1. Description of the invention to the application RU N 94037895/06 A1, MPK6 F 02 B 1/06, Adelshin A.V., " A.ADELSHIN THERMODYNAMIC CYCLE FOR INTERNAL COMBUSTION ENGINE WITHOUT FORCED INDUCTION AND INTERNAL COMBUSTION ENGINE, OPERATING WITH SAID CYCLE" The Russian Federation Committee for patents and trade marks, Bulletin N 24 from 27.08.96., page 108. 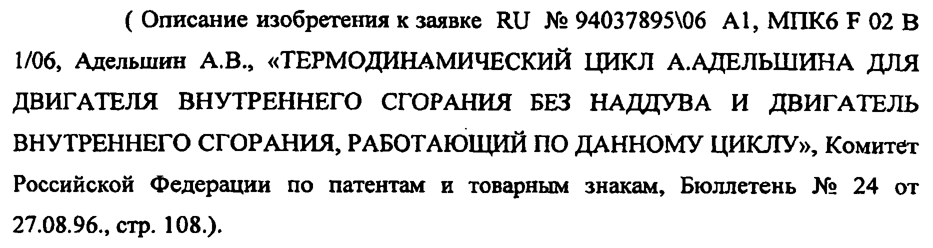
2. Description of the invention to the patent of the Russian Federation RU N 2055224 C1, MPK6 F 02 B 35/00, Yu.V. Gyavgyanen, S.V.Geller "INTERNAL COMBUSTION ENGINE", The Russian Federation Committee for patents and trade marks, Bulletin N 6 from 27.02.96., page 198-199. 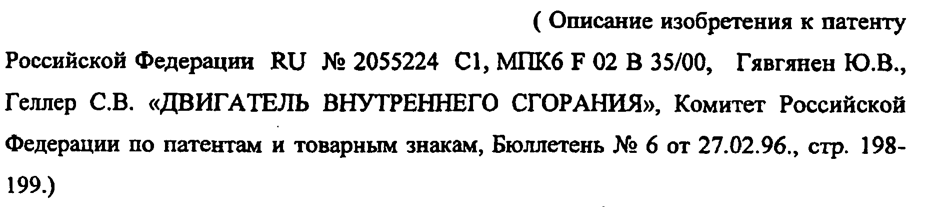
3. V.A.Kirillin, V.V.Sychov, A.E.Sheyndlin "TECHNICAL THERMODYNAMICS" Moscow, "SCIENCE", 1979. 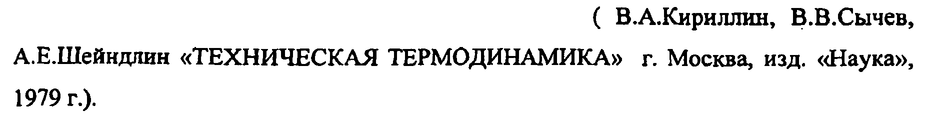
4. B.M.Yavorskiy, Yu.A.Seleznev "REFERENCE MANUAL ON PHYSICS FOR HIGHER SCHOOLS INTRANTS AND SELF-EDUCATION". Moscow, "SCIENCE", 1984. 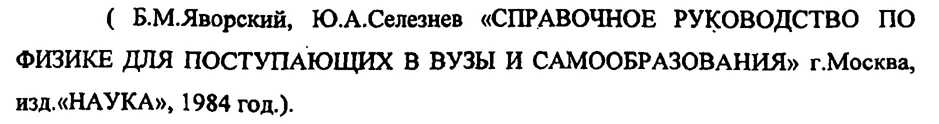
5. V.I.Kuznetsov "OPTIMIZATION OF PARAMETERS OF SWIRL PIPE AND METHODS OF ITS COMPUTATION", Leningrad, LTIPH, 1991, extract from page 10-11. 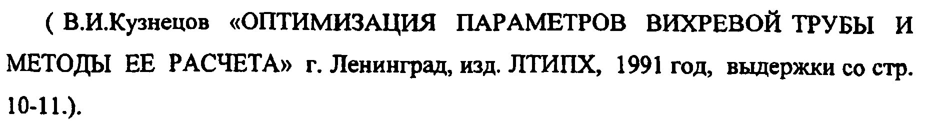
6. Authors' group under edition of A.S.Orlin and M.G.Kruglov "INTERNAL COMBUSTION ENGINES: TECHNOLOGY AND OPERATION OF PISTON AND COMBINED ENGINES". Moscow, "MECHANICAL ENGINEERING" 1980. 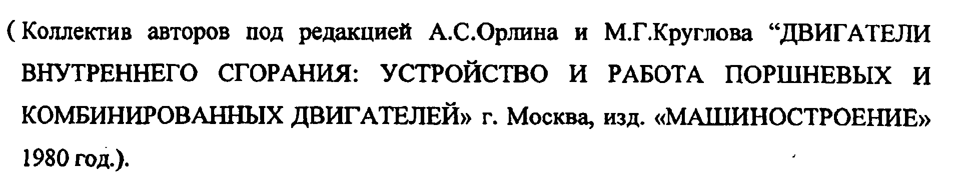
7. Authors' group under edition of V.N.Lukanin "INTERNAL COMBUSTION ENGINES" vol.1 "Theory of working processes ", Moscow, "HIGHER SCHOOL" 1995. 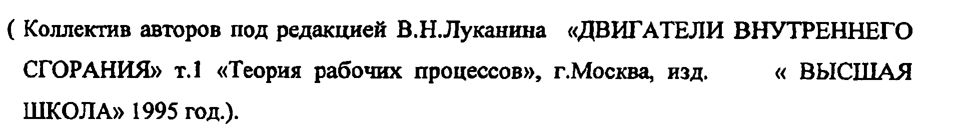
8. "PHYSICAL ENCYCLOPAEDIC DICTIONARY". Moscow, "SOVIET ENCYCLOPEDIA", 1984. 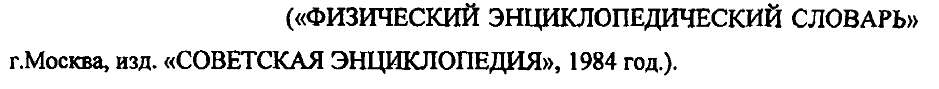
9. "REFRIGERATING MACHINES", reference book under edition of c.t.s. I.M.Kalnin, from a series of reference books "REFRIGERATING ENGINEERING", under edition of d.t.s. A.V.Bykov, Moscow, "LIGHT AND FOOD-PROCESSING INDUSTRY", 1982. 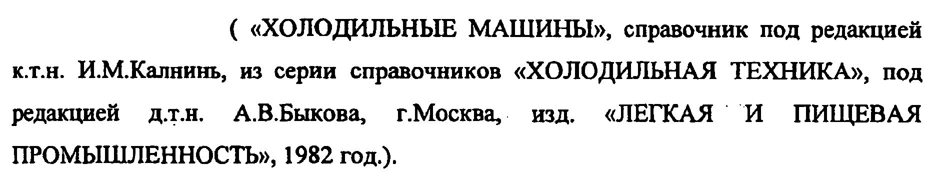
10. "HEATING ENGINEERING", under edition of V.N.Lukanin, Moscow, "HIGHER SCHOOL", 2000. 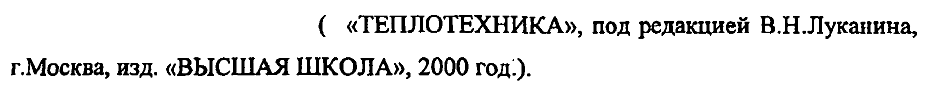
11. A.N.Lozhkin "HEAT AND REFRIGERANT POWER UNITS", abstract from lectures, Leningrad, LTIP (Leningrad technological institute of refrigerating industry), 1976. 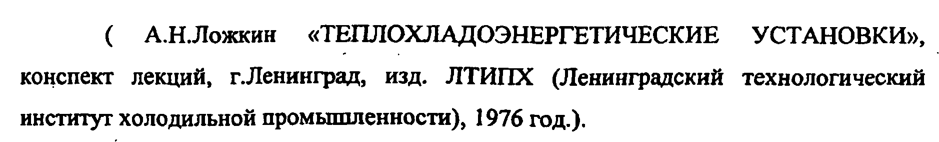
12. Yu.G.Frolov, V.V.Belik "PHYSICAL CHEMISTRY" Moscow, "CHEMISTRY", 1993.

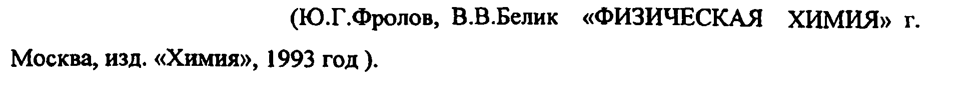

## Claims

1. Operating method for an internal combustion engine, representing a closed thermodynamic cycle, containing cycles of isochoric, isobaric heat input during combustion, adiabatic expansion of gases, isochoric heat removing at the moment of their discharge and adiabatic compression, wherein the internal combustion engine with a swirl energetic separation chamber (10) incorporate a single interdependent thermodynamic system with a single closed volume,
comprising the steps of: discharging exhaust gases into the swirl energetic separation chamber (10) of the internal combustion engine;
separating the gas flow consecutively into a cold paraxial flow with low pressure and a hot swirling flow with high pressure, wherein in the hot swirling flow the exhaust gases are heating up and making irreversible physical-chemical transformations with the opportunity of aggregative-phase transition of its chemical composing elements,
compensating and cooling of stayed hot swirling flow through cold paraxial flow with transformation of common thermodynamic and physical - chemical parameters of exhaust gases, wherein an aggregative phase transition of its chemical composing elements into a state of liquid occurs inside the swirl energetic separation chamber (10);
subsequently removing the liquid into a drainage (12); and
condensing exhaust gases and producing vacuum in the closed volume of the single thermodynamic system and making an additional positive power stroke by the expansion machine of the internal combustion engine as a vacuum engine.

2. Operating method as described in claim 1, further including the step of: making the aggregative- phase transition of chemical composing elements of exhaust gases into a state of ionized gas.

3. Operating method as described in claim 1, further including the step of:
heating the exhaust gases with the possibility of partial ionization of its chemical composing elements.

4. Operating method as described in any claim 1, 2, 3, further including the step of: cooling the exhaust gases with the possibility of partial condensation of its chemical composing elements.

5. Internal combustion engine, representing a closed thermodynamic cycle, containing cycles of isochoric, isobaric heat input during combustion, adiabatic expansion of gases, isochoric heat removing at the moment of their discharge and adiabatic compression;
wherein the internal combustion engine device comprises:
a swirl energetic separation chamber (10), incorporating a single interdependent thermodynamic system with a single closed volume;
means for discharging exhaust gases into the swirl energetic separation chamber (10) of the internal combustion engine;
means for separating the gas flow consecutively into a cold paraxial flow with low pressure and a hot swirling flow with high pressure, wherein in the hot swirling flow the exhaust gases are heating up and making irreversible physical-chemical transformations with the opportunity of aggregative-phase transition of its chemical composing elements,
means for compensating and cooling of stayed hot swirling flow through cold paraxial flow with transformation of common thermodynamic and physical - chemical parameters of exhaust gases wherein an aggregative phase transition of its chemical composing elements into a state of liquid occurs inside the swirl energetic separation chamber (10);
means for subsequently removing the liquid into a drainage ; and
means for condensing exhaust gases and producing vacuum in the closed volume of the single thermodynamic system and making an additional positive power stroke by the expansion machine of the internal combustion engine as a vacuum engine.

6. The engine as described in claim 5, wherein said drainage is adapted for the removal of used condensed working medium of the engine.

7. The engine as described in any of claims 5 or 6, wherein the engine further comprises:
an additional system (13);
wherein said additional system (13) is adapted for the removal of non-condensed gas constituent of used working medium of the engine.

8. The engine as described in any of claims 5 to 7, comprising a serially installed swirl energetic separation chamber (14, 15) forming an interdependent thermodynamic system.

9. The engine as described in any of claim 5 to 7, comprising a parallel installed swirl energetic separation chamber (18, 19) forming an interdependent thermodynamic system.

## Patentansprüche

1. Betriebsverfahren für einen Verbrennungsmotor, darstellend einen geschlossenen thermodynamischen Kreislauf, enthaltend Kreisläufe von isochorer, isobarer Wärmezufuhr während einer Verbrennung, adiabatische Expansion von Gasen, isochores Wärmeentfernen im Moment ihrer Ableitung und adiabatische Kompression, wobei der Verbrennungsmotor mit einer Wirbelenergietrennkammer (10) ein einziges voneinander abhängiges thermodynamisches System mit einem einzigen geschlossenen Volumen enthalten, aufweisend die Schritte von:
Ableiten von Abgasen in die Wirbelenergietrennkammer (10) des Verbrennungsmotors;
Trennen des Gasflusses nacheinander in einen kalten paraxialen Fluss mit niedrigem Druck und einen heißen Wirbelfluss mit hohem Druck, wobei in dem heißen Wirbelfluss die Abgase sich aufheizen und irreversible physikalisch-chemische Transformationen mit der Gelegenheit von Aggregatsphasenübergang von ihren chemischen Aufbauelementen durchführen,
Kompensieren und Kühlen von verbleibendem heißen Wirbelfluss durch kalten paraxialen Fluss mit Transformation von gemeinsamen thermodynamischen und physikalisch-chemischen Parametern von Abgasen, wobei im Inneren der Wirbelenergietrennkammer (10) ein Aggregatsphasenübergang von seinen chemischen Aufbauelementen in einen Zustand von Flüssigkeit auftritt;
nachfolgendes Entfernen der Flüssigkeit in eine Drainage (12); und
Kondensieren von Abgasen und Erzeugen von Vakuum in dem geschlossenen Volumen des einzigen thermodynamischen Systems und Durchführen eines zusätzlichen positiven Arbeitshubs mittels der Expansionsmaschine des Verbrennungsmotors als eine Vakuummaschine.

2. Betriebsverfahren wie in Anspruch 1 beschrieben, ferner aufweisend den Schritt von: Durchführen des Aggregatsphasenübergangs von chemischen Aufbauelementen von Abgasen in einen Zustand von ionisiertem Gas.

3. Betriebsverfahren wie in Anspruch 1 beschrieben, ferner aufweisend den Schritt von:
Erwärmen der Abgase mit der Möglichkeit von teilweiser Ionisierung von seinen chemischen Aufbauelementen.

4. Betriebsverfahren wie in einem beliebigen der Ansprüche 1, 2, 3 beschrieben, ferner aufweisend den Schritt von: Kühlen der Abgase mit der Möglichkeit von teilweiser Kondensation von seinen chemischen Aufbauelementen.

5. Verbrennungsmotor, darstellend einen geschlossenen thermodynamischen Kreislauf, aufweisend Kreisläufe von isochorer, isobarer Wärmezufuhr während der Verbrennung, adiabatische Expansion von Gasen, isochore Wärmeentfernung in dem Moment ihrer Ableitung und adiabatische Kompression;
wobei das Verbrennungsmotorgerät aufweist:
eine Wirbelenergietrennkammer (10), die ein einziges voneinander abhängiges thermodynamisches System mit einem einzigen geschlossenen Volumen enthält;
Mittel zum Ableiten von Abgasen in die Wirbelenergietrennkammer (10) des Verbrennungsmotors;
Mittel zum Trennen des Gasflusses nacheinander in einen kalten paraxialen Fluss mit niedrigem Druck und einen heißen Wirbelfluss mit hohem Druck, wobei in dem heißen Wirbelfluss die Abgase sich erwärmen und irreversible physikalisch-chemische Transformationen mit der Gelegenheit von Aggregatsphasenübergang seiner chemischen Aufbauelemente durchführen,
Mittel zum Kompensieren und Kühlen von verbleibendem heißem Wirbelfluss durch kalten paraxialen Fluss mit einer Transformation von gemeinsamen thermodynamischen und physikalisch-chemischen Parametern von Abgasen, wobei im Inneren der wirbelenergetischen Trennkammer (10) ein Aggregatsphasenübergang von seinen chemischen Aufbauelementen in einen Zustand von Flüssigkeit auftritt;
Mittel zum nachfolgenden Entfernen der Flüssigkeit in eine Drainage; und
Mittel zum Kondensieren von Abgasen und Produzieren von Vakuum in dem geschlossenen Volumen des einzigen thermodynamischen Systems und Durchführen eines zusätzlichen positiven Arbeitshubs mittels der Expansionsmaschine des Verbrennungsmotors als ein Vakuummotor.

6. Der Motor wie in Anspruch 5 beschrieben, wobei die Drainage für das Entfernen von verwendetem kondensiertem Arbeitsmedium des Motors eingerichtet ist.

7. Der Motor wie in einem beliebigen der Ansprüche 5 oder 6 beschrieben, wobei der Motor ferner aufweist:
ein zusätzliches System (13),
wobei das zusätzliche System (13) für das Entfernen von nichtkondensierten Gaskonstituenten von verwendetem Arbeitsmedium des Motors eingerichtet ist.

8. Der Motor wie in einem beliebigen der Ansprüche 5 bis 7 beschrieben, aufweisend eine seriell installierte Wirbelenergietrennkammer (14, 15), bildend ein voneinander abhängiges thermodynamisches System.

9. Der Motor wie in einem beliebigen der Ansprüche 5 bis 7 beschrieben, aufweisend eine parallel installierte Wirbelenergietrennkammer (18, 19), bildend ein voneinander abhängiges thermodynamisches System.

## Revendications

1. Procédé de fonctionnement pour un moteur à combustion interne, présentant un cycle thermodynamique fermé, contenant des cycles d'apport thermique isochore et isobare au cours de la combustion, d'expansion adiabatique des gaz, d'évacuation de chaleur isochore au moment de leur décharge et de compression adiabatique, **caractérisé en ce que** le moteur à combustion interne avec une chambre de séparation énergétique à turbulence (10) incorpore un système thermodynamique interdépendant unique avec un volume fermé unique,
comprenant les étapes consistant à : décharger des gaz d'échappement dans la chambre de séparation énergétique à turbulence (10) du moteur à combustion interne ;
séparer l'écoulement de gaz consécutivement en un écoulement paraxial froid à basse pression et un écoulement tourbillonnant chaud à haute pression, **caractérisé en ce que**, dans l'écoulement tourbillonnant chaud, les gaz d'échappement se réchauffent et réalisent des transformations physico-chimiques irréversibles avec l'opportunité de transition de phase agrégative de leurs éléments de composition chimiques,
compenser et refroidir l'écoulement tourbillonnant chaud restant par l'intermédiaire de l'écoulement paraxial froid avec une transformation de paramètres thermodynamiques et physico-chimiques communs des gaz d'échappement, **caractérisé en ce qu'**une transition de phase agrégative de leurs éléments de composition chimiques en un état de liquide se produit à l'intérieur de la chambre de séparation énergétique à turbulence (10) ;
évacuer par la suite le liquide dans un élément de purge (12) ; et
condenser les gaz d'échappement et produire une dépression dans le volume fermé du système thermodynamique unique et réaliser une course de combustion positive supplémentaire par l'intermédiaire de la machine d'expansion du moteur à combustion interne comme un moteur à dépression.

2. Procédé de fonctionnement selon la revendication 1, comprenant en outre l'étape consistant à : réaliser la transition de phase agrégative d'éléments de composition chimiques des gaz d'échappement dans un état de gaz ionisé.

3. Procédé de fonctionnement selon la revendication 1, comprenant en outre l'étape consistant à : chauffer les gaz d'échappement avec la possibilité d'ionisation partielle de leurs éléments de composition chimiques.

4. Procédé de fonctionnement selon l'une quelconque des revendications 1, 2 et 3, comprenant en outre l'étape consistant à : refroidir les gaz d'échappement avec la possibilité de condensation partielle de leurs éléments de composition chimiques.

5. Moteur à combustion interne, présentant un cycle thermodynamique fermé, contenant des cycles d'apport thermique isochore et isobare au cours de la combustion, d'expansion adiabatique des gaz, d'évacuation de chaleur isochore au moment de leur décharge et de compression adiabatique ;
**caractérisé en ce que** le dispositif de moteur à combustion interne comprend :
une chambre de séparation énergétique à turbulence (10), incorporant un système thermodynamique interdépendant unique avec un volume fermé unique ;
des moyens destinés à décharger des gaz d'échappement dans la chambre de séparation énergétique à turbulence (10) du moteur à combustion interne ;
des moyens destinés à séparer l'écoulement de gaz consécutivement en un écoulement paraxial froid à basse pression et un écoulement tourbillonnant chaud à haute pression, **caractérisé en ce que**, dans l'écoulement tourbillonnant chaud, les gaz d'échappement se réchauffent et réalisent des transformations physico-chimiques irréversibles avec l'opportunité de transition de phase agrégative de leurs éléments de composition chimiques,
des moyens destinés à compenser et refroidir l'écoulement tourbillonnant chaud restant par l'intermédiaire de l'écoulement paraxial froid avec une transformation de paramètres thermodynamiques et physico-chimiques communs des gaz d'échappement, **caractérisé en ce qu'**une transition de phase agrégative de leurs éléments de composition chimiques en un état de liquide se produit à l'intérieur de la chambre de séparation énergétique à turbulence (10) ;
des moyens destinés à évacuer par la suite le liquide dans un élément de purge ; et
des moyens destinés à condenser les gaz d'échappement et produire une dépression dans le volume fermé du système thermodynamique unique et réaliser une course de combustion positive supplémentaire par l'intermédiaire de la machine d'expansion du moteur à combustion interne comme un moteur à dépression.

6. Moteur selon la revendication 5, **caractérisé en ce que** ledit élément de purge est adapté pour l'évacuation de fluide moteur condensé utilisé du moteur.

7. Moteur selon l'une quelconque des revendications 5 ou 6, **caractérisé en ce que** le moteur comprend en outre :
un système supplémentaire (13) ;
**caractérisé en ce que** ledit système supplémentaire (13) est adapté pour l'évacuation d'un constituant gazeux non condensé de fluide moteur utilisé du moteur.

8. Moteur selon l'une quelconque des revendications 5 à 7, comprenant une chambre de séparation énergétique à turbulence installée en série (14, 15) formant un système thermodynamique interdépendant.

9. Moteur selon l'une quelconque des revendications 5 à 7, comprenant une chambre de séparation énergétique à turbulence installée en parallèle (18, 19) formant un système thermodynamique interdépendant.
